# EUROPEAN PATENT APPLICATION

(11) **EP 4 691 835 A1**
(43) Date of publication of application: **11.02.2026**
(21) Application number: 24778029.9
(22) Date of filing: 26.03.2024
(51) Int. Cl.: B60L 53/00, B60L 53/50, B60L 53/51, B60L 53/10, B60L 53/20

(54) **CHARGING DEVICE OF POWER BATTERY, CHARGING CONTROL SYSTEM, AND VEHICLE**

(30) Priority: 29.03.2023 CN 202310365549
(71) Applicant: BYD Company Limited, Shenzhen, Guangdong 518118 (CN)
(72) Inventor: LIAN, Yubo, Shenzhen, Guangdong 518118 (CN); LING, Heping, Shenzhen, Guangdong 518118 (CN); ZHAI, Zhen, Shenzhen, Guangdong 518118 (CN); LIU, Junhua, Shenzhen, Guangdong 518118 (CN); LIU, Yuhan, Shenzhen, Guangdong 518118 (CN)
(74) Representative: Mathys & Squire
(86) International application number: PCT/CN2024/083898
(87) International publication number: WO 2024/199241

(57) **Abstract**

A vehicle is provided. The vehicle is provided with a charging control system. The charging control system is provided with a charging apparatus for a power battery. The charging apparatus (100) includes: a charging module (110), where an alternating current charging port (230) and a photovoltaic solar module (220) are adapted to connect to a first end of the charging module (110), and a power battery (210) is adapted to connect to a second end of the charging module (110); and when in a first state, the charging module (110) is configured to: convert three-phase alternating current input through the alternating current charging port (230) into direct current to charge the power battery (210), and perform voltage conversion on electric energy output by the photovoltaic solar module (220) to charge the power battery (210).

## Description

### CROSS-REFERENCE TO RELATED PUBLICATIONS

The present disclosure is based on and claims priority to Chinese Patent Application with publication NO. 202310365549X and publication date March 29, 2023, which is incorporated herein as reference in its entirety.

### TECHNICAL FIELD

The present disclosure relates to the field of vehicle technologies, and in particular, to a charging apparatus for a power battery, a charging control system, and a vehicle.

### BACKGROUND

Solar energy is a high-quality and sustainable vehicle energy source with a relatively high application value. However, in the related art, photovoltaic charging technical solutions currently used in new energy vehicles have technical problems of a low conversion rate, high costs, and a slow charging speed.

### SUMMARY

The present disclosure is intended to solve one of the technical problems in the related art at least to some extent. Therefore, a first objective of the present disclosure is to provide a charging apparatus for a power battery. The charging apparatus for a power battery charges a power battery collaboratively through an alternating current charging port and a photovoltaic solar module, to increase the charging speed, increase the conversion rate of solar energy, and reduce the demand for grid energy, thereby saving charging costs for vehicle owners.

A second objective of the present disclosure is to provide a charging control system.

A third objective of the present disclosure is to provide a vehicle.

In order to achieve the foregoing objective, an embodiment of a first aspect of the present disclosure provides a charging apparatus for a power battery. The charging apparatus for a power battery includes: a charging module, wherein an alternating current charging port and a photovoltaic solar module are adapted to connect to a first end of the charging module, and a power battery is adapted to connect to a second end of the charging module; and wherein in a first state, the charging module is configured to: convert three-phase alternating current input through the alternating current charging port into direct current to charge the power battery, and perform voltage conversion on electric energy output by the photovoltaic solar module to charge the power battery.

According to the charging apparatus for a power battery in this embodiment of the present disclosure, the alternating current charging port and the photovoltaic solar module are adapted to connect to the first end of the charging module, and the power battery is adapted to connect to the second end of the charging module; and wherein in the first state, the charging module is configured to: convert three-phase alternating current input through the alternating current charging port into direct current to charge the power battery, and perform voltage conversion on electric energy output by the photovoltaic solar module to charge the power battery. Therefore, the charging apparatus can increase the charging speed, increase the conversion rate of solar energy, and reduce the demand for grid energy, thereby saving charging costs for vehicle owners.

In addition, the charging apparatus for a power battery according to the foregoing embodiment of the present disclosure may further have the following additional technical features:

According to one embodiment of the present disclosure, the charging module includes: an alternating current charging unit, wherein the alternating current charging port is adapted to connect to a first end of the alternating current charging unit, and the power battery is adapted to connect to a second end of the alternating current charging unit; and a voltage change unit, wherein the photovoltaic solar module is adapted to connect to a first end of the voltage change unit, and the power battery is adapted to connect to a second end of the voltage change unit; and wherein in the first state, the alternating current charging unit is configured to convert three-phase alternating current input through the alternating current charging port into direct current to charge the power battery, and the voltage change unit is configured to perform voltage conversion on electric energy output by the photovoltaic solar module to charge the power battery.

According to one embodiment of the present disclosure, the alternating current charging unit includes: a first inductor, a first bridge arm, a second inductor, a second bridge arm, a third inductor, and a third bridge arm; a live wire of the alternating current charging port is adapted to connect to a first end of the first inductor, a live wire of the alternating current charging port is adapted to connect to a first end of the second inductor, and a live wire of the alternating current charging port is adapted to connect to a first end of the third inductor; a second end of the first inductor is connected to a midpoint of the first bridge arm, a second end of the second inductor is connected to a midpoint of the second bridge arm, and a second end of the third inductor is connected to a midpoint of the third bridge arm; first ends of the first bridge arm, the second bridge arm, and the third bridge arm are connected together to form a first current convergence end, and second ends of the first bridge arm, the second bridge arm, and the third bridge arm are connected together to form a second current convergence end; a positive electrode of the power battery is adapted to connect to the first current convergence end, and a negative electrode of the power battery is adapted to connect to the second current convergence end; and wherein in a second state, the first bridge arm, the second bridge arm, and the third bridge arm are configured to convert three-phase alternating current input through the alternating current charging port into direct current to charge the power battery.

According to one embodiment of the present disclosure, the voltage change unit includes: a fourth inductor and a fourth bridge arm; a positive electrode of the photovoltaic solar module is adapted to connect to a first end of the fourth inductor, a second end of the fourth inductor is connected to a midpoint of the fourth bridge arm, the positive electrode of the power battery is adapted to connect to a first end of the fourth bridge arm, and the negative electrode of the power battery is adapted to connect to a second end of the fourth bridge arm; and wherein in a third state, the fourth bridge arm is configured to perform voltage conversion on electric energy output by the photovoltaic solar module to charge the power battery.

According to one embodiment of the present disclosure, the alternating current charging unit further includes: a fifth bridge arm, wherein an N wire of the alternating current charging port is adapted to connect to a midpoint of the fifth bridge arm, a first end of the fifth bridge arm is connected to the first current convergence end, and a second end of the fifth bridge arm is connected to the second current convergence end; and wherein in a fourth state, the first bridge arm, the second bridge arm, the third bridge arm, and the fifth bridge arm are configured to convert three-phase alternating current input through the alternating current charging port into direct current to charge the power battery.

According to one embodiment of the present disclosure, the photovoltaic solar module is formed by connecting a plurality of photovoltaic solar panels in series, and an output voltage of the photovoltaic solar module is greater than 60V.

According to one embodiment of the present disclosure, the charging apparatus for a power battery further includes a switching module, where the switching module is configured to enable the charging apparatus to switch between the first state, the second state, the third state, and the fourth state, and enable the charging apparatus to stop charging.

According to one embodiment of the present disclosure, the charging apparatus for a power battery further includes: a DC-DC module, where a first end of the DC-DC module is connected to the charging apparatus, and a second end of the DC-DC module is connected to the power battery.

According to an embodiment of the present disclosure, inductors in a PFC (Power Factor Correction) circuit are reused as the first inductor, the second inductor, and the third inductor, and bridge arms in the PFC circuit are reused as the first bridge arm, the second bridge arm, and the third bridge arm.

According to one embodiment of the present disclosure, the charging apparatus for a power battery further includes: a buffer module, wherein the buffer module is disposed between the positive electrode and the negative electrode of the photovoltaic solar module, and the buffer module is configured to reduce impact on components of a voltage change module when the photovoltaic solar module outputs electric energy to the voltage change module.

According to one embodiment of the present disclosure, the buffer module includes: a first resistor and a first capacitor connected in series, wherein a series-connected first end is connected to the positive electrode of the photovoltaic solar module, and a series-connected second end is connected to the negative electrode of the photovoltaic solar module.

According to one embodiment of the present disclosure, the buffer module includes: a fifth inductor and a second capacitor connected in series, wherein a series-connected first end is connected to the positive electrode of the photovoltaic solar module, and a series-connected second end is connected to the negative electrode of the photovoltaic solar module.

According to one embodiment of the present disclosure, a DC-DC circuit of an on-board charger OBC (On-Board Charger) module is reused as the DC-DC module.

In order to achieve the foregoing objective, an embodiment of a second aspect of the present disclosure provides a charging control system, including a power battery and the foregoing charging apparatus for a power battery, wherein the power battery is connected to a first end of the charging apparatus.

In addition, the charging control system according to the foregoing embodiment of the present disclosure may further have the following additional technical features:

According to one embodiment of the present disclosure, the charging control system further includes: a photovoltaic solar module, wherein the photovoltaic solar module is connected to a second end of the charging apparatus.

According to one embodiment of the present disclosure, the charging control system further includes: an alternating current charging port, wherein the alternating current charging port is connected to the second end of the charging apparatus.

In order to achieve the foregoing objective, a vehicle provided in an embodiment of a third aspect of the present disclosure includes the foregoing charging control system or the foregoing charging apparatus for a power battery.

According to the vehicle in this embodiment of the present disclosure, the foregoing charging control system can increase the charging speed, increase the conversion rate of solar energy and reduce the demand for grid energy, thereby saving the charging costs for vehicle owners.

Additional aspects and advantages of the present disclosure will be partially set forth in the following description, and will partially become apparent from the following description or may be learned from practice of the present disclosure.

### BRIEF DESCRIPTION OF DRAWINGS

FIG. 1 is a block diagram of a charging apparatus for a power battery according to an embodiment of the present disclosure;
FIG. 2 is a block diagram of a charging module according to an embodiment of the present disclosure;
FIG. 3 is a circuit topology diagram of a charging apparatus for a power battery according to one embodiment of the present disclosure;
FIG. 4 is a circuit topology diagram of a charging apparatus for a power battery according to another embodiment of the present disclosure;
FIG. 5 is a circuit topology diagram of a charging apparatus for a power battery according to still another embodiment of the present disclosure;
FIG. 6 is a circuit topology diagram of a charging apparatus for a power battery according to yet another embodiment of the present disclosure;
FIG. 7 is a circuit topology diagram of a charging apparatus for a power battery according to one embodiment of the present disclosure;
FIG. 8 is a circuit topology diagram of a charging apparatus for a power battery according to another embodiment of the present disclosure;
FIG. 9 is a circuit topology diagram of a charging apparatus for a power battery according to one embodiment of the present disclosure;
FIG. 10 is a circuit topology diagram of a charging apparatus for a power battery according to another embodiment of the present disclosure;
FIG. 11 is a circuit topology diagram of a charging apparatus for a power battery according to still another embodiment of the present disclosure;
FIG. 12 is a circuit topology diagram of a charging apparatus for a power battery according to yet another embodiment of the present disclosure;
FIG. 13 is a circuit topology diagram of a charging apparatus for a power battery according to one embodiment of the present disclosure;
FIG. 14 is a circuit topology diagram of a charging apparatus for a power battery according to another embodiment of the present disclosure;
FIG. 15 is a circuit topology diagram of a charging apparatus for a power battery according to still another embodiment of the present disclosure;
FIG. 16 is a circuit topology diagram of a charging apparatus for a power battery according to yet another embodiment of the present disclosure;
FIG. 17 is a circuit topology diagram of a charging apparatus for a power battery according to one embodiment of the present disclosure;
FIG. 18 is a circuit topology diagram of a charging apparatus for a power battery according to another embodiment of the present disclosure;
FIG. 19 is a circuit topology diagram of a charging apparatus for a power battery according to still another embodiment of the present disclosure;
FIG. 20 is a circuit topology diagram of a charging apparatus for a power battery according to yet another embodiment of the present disclosure;
FIG. 21 is a circuit topology diagram of a charging apparatus for a power battery according to one embodiment of the present disclosure;
FIG. 22 is a circuit topology diagram of a charging apparatus for a power battery according to one embodiment of the present disclosure;
FIG. 23 is a circuit topology diagram of a charging apparatus for a power battery according to another embodiment of the present disclosure;
FIG. 24 is a circuit topology diagram of a charging apparatus for a power battery according to one embodiment of the present disclosure;
FIG. 25 is a block diagram of a charging control system according to an embodiment of the present disclosure; and
FIG. 26 is a block diagram of a vehicle according to an embodiment of the present disclosure.

### DESCRIPTION OF EMBODIMENTS

Embodiments of the present disclosure are described in detail below; examples of the embodiments are shown in the accompanying drawings; and same or similar reference numerals throughout represent same or similar components or components having same or similar functions. The embodiments described below with reference to the accompanying drawings are exemplary and are intended to explain the present disclosure, but should not be construed as restrictions to the present disclosure.

The following describes, with reference to the accompanying drawings, a charging apparatus for a power battery, a charging control system, and a vehicle provided in embodiments of the present disclosure.

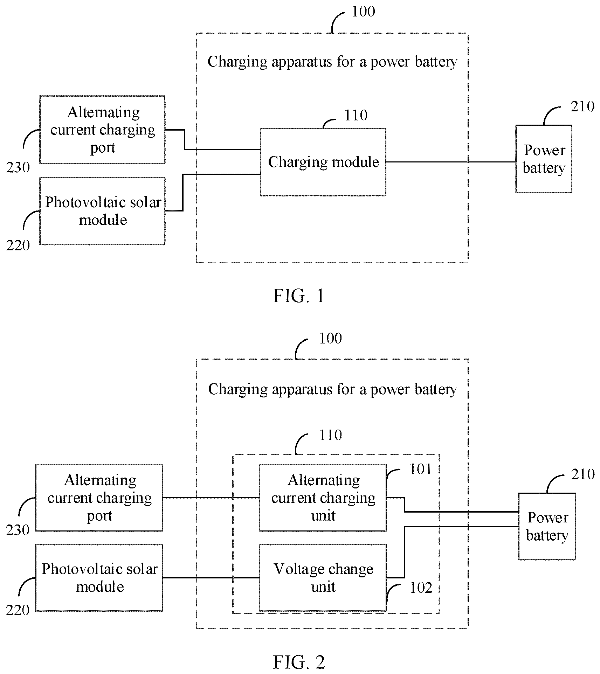

FIG. 1 is a block diagram of a charging apparatus for a power battery according to an embodiment of the present disclosure.

As shown in FIG. 1, the charging apparatus for a power battery may include: a charging module 110.

An alternating current charging port 230 and a photovoltaic solar module 220 are adapted to connect to a first end of the charging module 110, and a power battery 210 is adapted to connect to a second end of the charging module 110; and when in a first state, the charging module 110 is configured to: convert three-phase alternating current input through the alternating current charging port 230 into direct current to charge the power battery 210, and perform voltage conversion on electric energy output by the photovoltaic solar module 220 to charge the power battery 210.

Specifically, the alternating current charging port 230 is connected to an end of the charging module 110, the photovoltaic solar module 220 is connected to the end of the charging module 110, and the other end of the charging module 110 is connected to the power battery 210 so that energy output by the alternating current charging port 230 can flow through the charging module 110, and energy output by the photovoltaic solar module 220 can flow through the charging module 110. When in the first state, that is, in a collaborative state of three single-phase alternating current charging and photovoltaic charging, for example, the charging module 110 can be controlled by a controller, so that three-phase alternating current input through the alternating current charging port 230, after flowing through the charging module 110, is converted into direct current, and therefore the power battery 210 can be charged; and the controller can further control the charging module 110 to perform voltage conversion on electric energy output by the photovoltaic solar module 220, after flowing through the charging module 110, to charge the power battery 210, for example, with an increased voltage. Therefore, charging the power battery 210 through the alternating current charging port 230 in combination with the photovoltaic solar module 220 can increase the charging speed, increase the conversion rate of solar energy, and reduce the demand for grid energy, thereby saving the charging costs for vehicle owners.

The charging apparatus for a power battery according to the present disclosure is described in detail below.

According to one embodiment of the present disclosure, as shown in FIG. 2, the charging module 110 includes: an alternating current charging unit 101, where an alternating current charging port 230 is adapted to connect to a first end of the alternating current charging unit 101, and a power battery 210 is adapted to connect to a second end of the alternating current charging unit 101; and a voltage change unit 102, wherein a photovoltaic solar module 220 is adapted to connect to a first end of the voltage change unit 102, and the power battery 210 is adapted to connect to a second end of the voltage change unit 102. Wherein in a first state, the alternating current charging unit 101 is configured to convert three-phase alternating current input through the alternating current charging port 230 into direct current to charge the power battery 210, and the voltage change unit 102 is configured to perform voltage conversion on electric energy output by the photovoltaic solar module 220 to charge the power battery 210.

Specifically, the charging module 110 may include the alternating current charging unit 101 and the alternating current charging unit 102, wherein one end of the alternating current charging unit 101 is connected to the alternating current charging port 230, the other end is connected to the power battery 210, one end of the alternating current charging unit 102 is connected to the photovoltaic solar module 220, and the other end is connected to the power battery 210, so that energy output by the alternating current charging port 230 can flow through the alternating current charging unit 101, and energy output by the photovoltaic solar module 220 can flow through the alternating current charging unit 102. Wherein in the first state, that is, in a collaborative state of three single-phase alternating current charging and photovoltaic solar module charging, for example, the charging module 110 can be controlled by a controller, so that three-phase alternating current input through the alternating current charging port 230, after flowing through the alternating current charging unit 101, is converted into direct current, and therefore the power battery 210 can be charged. The controller can further control the alternating current charging unit 102, so that electric energy output by the photovoltaic solar module 220 changes in voltage, after flowing through the alternating current charging unit 102, to charge the power battery 210, for example, with an increased voltage. Therefore, charging the power battery 210 through the alternating current charging port 230 in combination with the photovoltaic solar module 220 can increase the charging speed, increase the conversion rate of solar energy, and reduce the demand for grid energy, thereby saving the charging costs for vehicle owners.

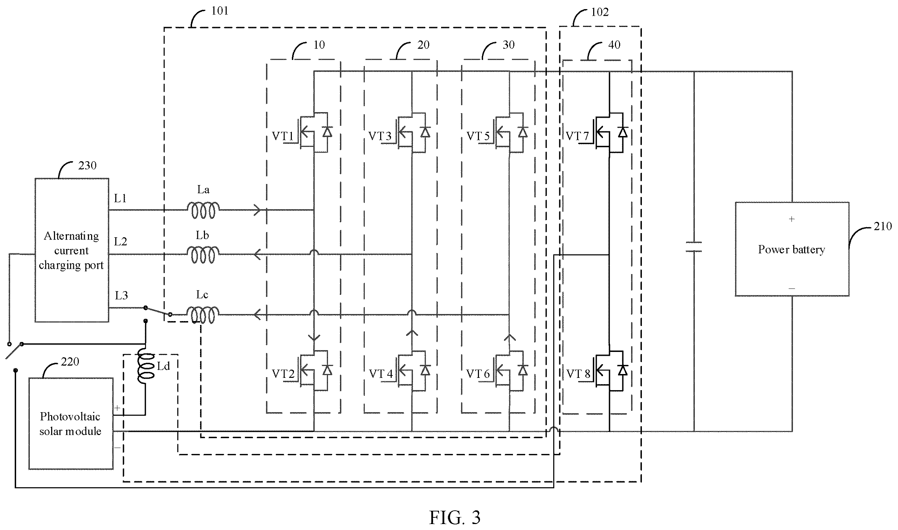

According to one embodiment of the present disclosure, as shown in FIG. 3, the alternating current charging unit 101 includes: a first inductor La, a first bridge arm 10, a second inductor Lb, a second bridge arm 20, a third inductor Lc, and a third bridge arm 30. A live wire L1 of the alternating current charging port 230 is adapted to connect to a first end of the first inductor La, a live wire L2 of the alternating current charging port 230 is adapted to connect to a first end of the second inductor Lb, and a live wire L3 of the alternating current charging port 230 is adapted to connect to a first end of the third inductor Lc. A second end of the first inductor La is connected to a midpoint of the first bridge arm 10, a second end of the second inductor Lb is connected to a midpoint of the second bridge arm 20, and a second end of the third inductor Lc is connected to a midpoint of the third bridge arm 30. First ends of the first bridge arm 10, the second bridge arm 20, and the third bridge arm 30 are connected together to form a first current convergence end, and second ends of the first bridge arm 10, the second bridge arm 20, and the third bridge arm 30 are connected together to form a second current convergence end. A positive electrode of the power battery 210 is adapted to connect to the first current convergence end, and a negative electrode of the power battery 210 is adapted to connect to the second current convergence end. When in a second state, the first bridge arm 10, the second bridge arm 20, and the third bridge arm 30 are configured to convert three-phase alternating current input through the alternating current charging port 230 into direct current to charge the power battery 210.

Specifically, as shown in FIG. 3, the first bridge arm 10 includes: a first switching tube VT1 and a second switching tube VT2 connected in series, wherein a first end of the first switching tube VT1 and a first end of the second switching tube VT2 are both connected to a controller (not shown in the figure), a second end of the first switching tube VT1 and a third end of the second switching tube VT2 are connected, and a first node is provided as the midpoint of the first bridge arm 10. The second bridge arm 20 includes a third switching tube VT3 and a fourth switching tube VT4 connected in series, wherein a first end of the third switching tube VT3 and a first end of the fourth switching tube VT4 are both connected to the controller (not shown in the figure), a second end of the third switching tube VT3 and a third end of the fourth switching tube VT4 are connected, and a second node is provided as the midpoint of the second bridge arm 20. The third bridge arm 30 includes: a fifth switching tube VT5 and a sixth switching tube VT6 connected in series, wherein a first end of the fifth switching tube VT5 and a first end of the sixth switching tube VT6 are both connected to the controller (not shown in the figure), a second end of the fifth switching tube VT5 and a third end of the sixth switching tube VT6 are connected, and a third node is provided as the midpoint of the third bridge arm 30. One end of the first inductor La is connected to the live wire L1 of the alternating current charging port 230, and the other end of the first inductor La is connected to the midpoint of the first bridge arm 10. One end of the second inductor Lb is connected to the live wire L2 of the alternating current charging port 230, and the other end of the second inductor Lb is connected to the midpoint of the second bridge arm 20. One end of the third inductor Lc is connected to the live wire L3 of the alternating current charging port 230, and the other end of the third inductor Lc is connected to the midpoint of the third bridge arm 30. A third end of the first switching tube VT1 (the first end of the first bridge arm 10), a third end of the third switching tube VT3 (the first end of the second bridge arm 20), and a third end of the fifth switching tube VT5 (the first end of the third bridge arm 30) are connected to form the first current convergence end. A second end of the second switching tube VT2 (the second end of the first bridge arm 10), a second end of the fourth switching tube VT4 (the second end of the second bridge arm 20), and a second end of the sixth switching tube VT6 (the second end of the third bridge arm 30) are connected to form the second current convergence end. The first current convergence end is connected to the positive electrode of the power battery 210, and the second current convergence end is connected to the negative electrode of the power battery 210.

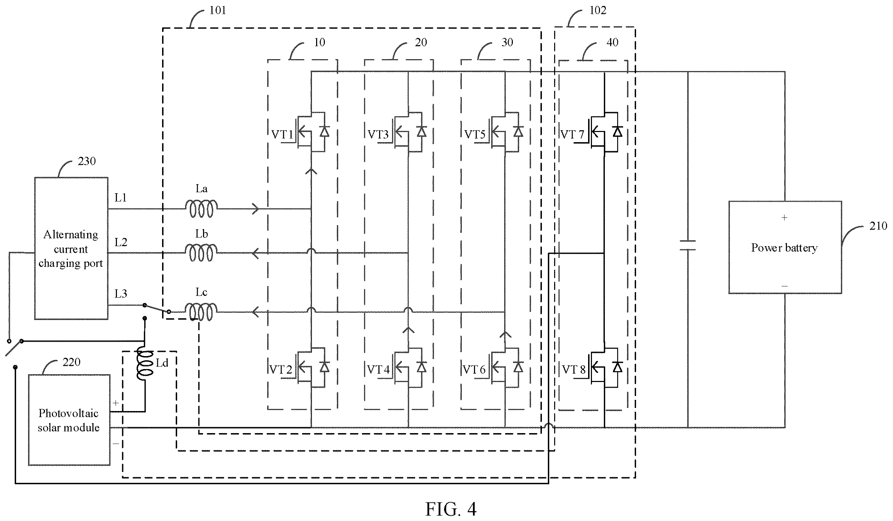

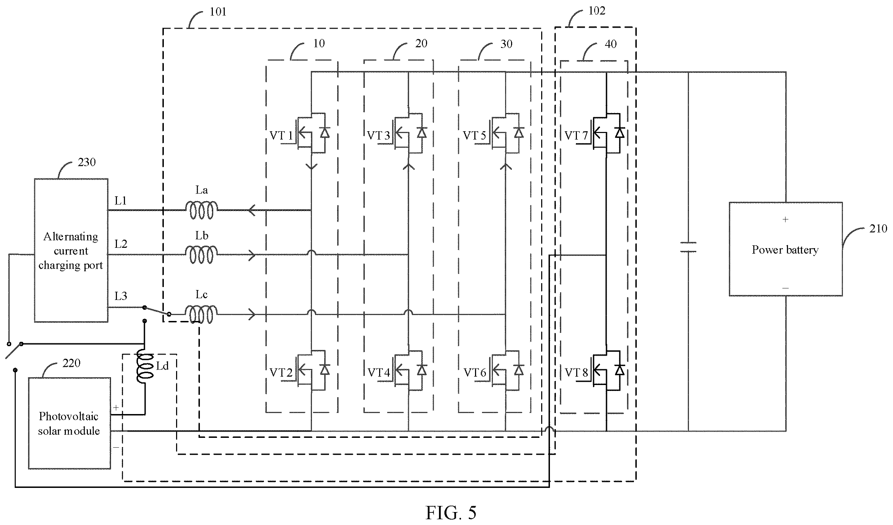

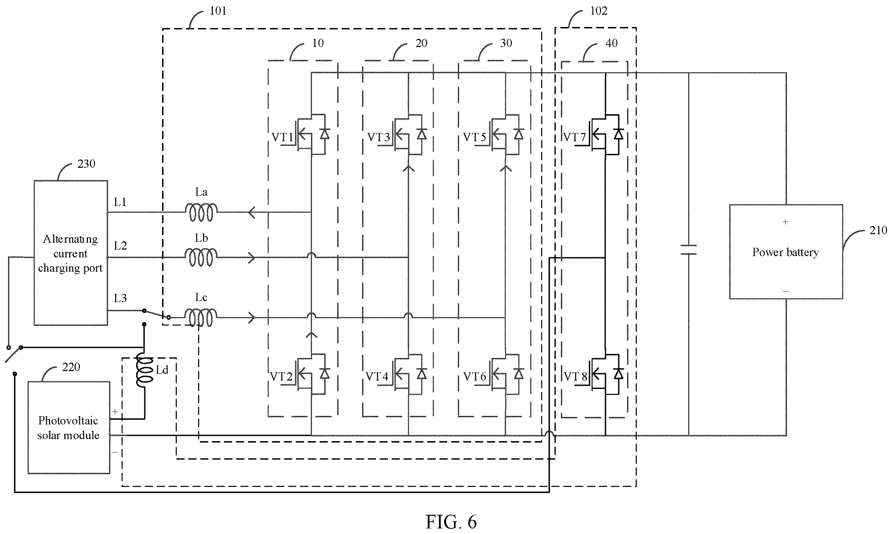

When in the second state, that is, when the power battery 210 is charged through the alternating current charging port 230, electricity is stored in an inductor by controlling the first bridge arm 10, the second bridge arm 20, and the third bridge arm 30, and then the electricity stored in the inductor is released into the power battery 210 by controlling the first bridge arm 10, the second bridge arm 20, and the third bridge arm 30, so that three-phase alternating current input through the alternating current charging port 230 can be converted into direct current to charge the power battery 210. For example, as shown in FIG. 3, in a positive half cycle of alternating current, within a first time period, the first bridge arm 10, the second bridge arm 20, and the third bridge arm 30 can be controlled by a controller. For example, the controller can control the second switching tube VT2, the fourth switching tube VT4, and the sixth switching tube VT6 to be in an on state and control the first switching tube VT1, the third switching tube VT3, and the fifth switching tube VT5 to be in an off state, so that energy at the alternating current charging port 230 is stored in the first inductor La, the second inductor Lb, and the third inductor Lc. As shown in FIG. 4, within a second time period, the controller can control the first switching tube VT1, the fourth switching tube VT4, and the sixth switching tube VT6 to be in an on state and control the second switching tube VT2, the third switching tube VT3, and the fifth switching tube VT5 to be in an off state, the alternating current charging port 230, the first inductor La, the first switching tube VT1, the power battery 210, the fourth switching tube VT4, and the second inductor Lb form a loop, and the alternating current charging port 230, the first inductor La, the first switching tube VT1, the power battery 210, the sixth switching tube VT6, and the third inductor Lc form a loop, so that the energy stored in the first inductor La is released into the power battery 210, and therefore three-phase alternating current input through the alternating current charging port 230 is converted into direct current charge the power battery 210. The controller can further control the second switching tube VT2, the third switching tube VT3, and the sixth switching tube VT6 to be in an on state and control the first switching tube VT1, the fourth switching tube VT4, and the fifth switching tube VT5 to be in an off state, the alternating current charging port 230, the second inductor Lb, the third switching tube VT3, the power battery 210, the second switching tube VT2, and the first inductor La form a loop, and the alternating current charging port 230, the second inductor Lb, the third switching tube VT3, the power battery 210, the sixth switching tube VT6, and the third inductor Lc form a loop, so that the energy stored in the second inductor Lb is released into the power battery 210, and therefore three-phase alternating current input through the alternating current charging port 230 is converted into direct current charge the power battery 210. The controller can further control the second switching tube VT2, the fourth switching tube VT4, and the fifth switching tube VT5 to be in an on state and control the first switching tube VT1, the third switching tube VT3, and the sixth switching tube VT6 to be in an off state, the alternating current charging port 230, the third inductor Lc, the fifth switching tube VT5, the power battery 210, the second switching tube VT2, and the first inductor La form a loop, and the alternating current charging port 230, the third inductor Lc, the fifth switching tube VT5, the power battery 210, the fourth switching tube VT4, and the second inductor Lb form a loop, so that the energy stored in the third inductor Lc is released into the power battery 210, and therefore three-phase alternating current input through the alternating current charging port 230 is converted into direct current charge the power battery 210. For example, as shown in FIG. 5, in a negative half cycle of alternating current, within a third time period, the first bridge arm 10, the second bridge arm 20, and the third bridge arm 30 can be controlled by a controller. For example, the controller can control the first switching tube VT1, the third switching tube VT3, and the fifth switching tube VT5 to be in an on state and control the second switching tube VT2, the fourth switching tube VT4, and the sixth switching tube VT6 to be in an off state, so that energy at the alternating current charging port 230 is stored in the first inductor La, the second inductor Lb, and the third inductor Lc. As shown in FIG. 6, within a fourth time period, the first bridge arm 10, the second bridge arm 20, and the third bridge arm 30 can be controlled by a controller. For example, the controller can control the second switching tube VT2, the third switching tube VT3, and the fifth switching tube VT5 to be in an on state and control the first switching tube VT1, the fourth switching tube VT4, and the sixth switching tube VT6 to be in an off state, the first inductor La, the alternating current charging port 230, the second inductor Lb, the third switching tube VT3, the power battery 210, and the second switching tube VT2 form a loop, and the first inductor La, the alternating current charging port 230, the third inductor Lc, the fifth switching tube VT5, the power battery 210, and the second switching tube VT2 form a loop, so that the energy stored in the first inductor La is released into the power battery 210, and therefore three-phase alternating current input through the alternating current charging port 230 is converted into direct current to charge the power battery 210. The controller can further control the first switching tube VT1, the fourth switching tube VT4, and the fifth switching tube VT5 to be in an on state and control the second switching tube VT2, the third switching tube VT3, and the sixth switching tube VT6 to be in an off state, the second inductor Lb, the alternating current charging port 230, the first inductor La, the first switching tube VT1, the power battery 210, and the fourth switching tube VT4 form a loop, and the second inductor Lb, the alternating current charging port 230, the third inductor Lc, the fifth switching tube VT5, the power battery 210, and the fourth switching tube VT4 form a loop, so that the energy stored in the second inductor Lb is released into the power battery 210, and therefore three-phase alternating current input through the alternating current charging port 230 is converted into direct current to charge the power battery 210. The controller can further control the first switching tube VT1, the third switching tube VT3, and the sixth switching tube VT6 to be in an on state and control the second switching tube VT2, the fourth switching tube VT4, and the fifth switching tube VT5 to be in an off state, the third inductor Lc, the alternating current charging port 230, the first inductor La, the first switching tube VT1, the power battery 210, and the sixth switching tube VT6 form a loop, and the third inductor Lc, the alternating current charging port 230, the second inductor Lb, the third switching tube VT3, the power battery 210, and the sixth switching tube VT6 form a loop, so that the energy stored in the third inductor Lc is released into the power battery 210, and therefore three-phase alternating current input through the alternating current charging port 230 is converted into direct current to charge the power battery 210.

It should be noted that in order to avoid a short-circuit event, an upper arm and a lower arm of the same bridge arm cannot be turned on at the same time, that is, when the upper arm of a bridge arm is in an on state, the lower arm of the bridge arm is in an off state, and when the lower arm of a bridge arm is in the on state, the upper arm of the bridge arm is in the off state. The controller can control the first bridge arm 10, the second bridge arm 20, and the third bridge arm 30 through a periodic control signal, such as a PWM signal.

According to one embodiment of the present disclosure, as shown in FIG. 3, the alternating current charging unit 102 includes: a fourth inductor Ld and a fourth bridge arm 40. A positive electrode of the photovoltaic solar module 220 is adapted to connect to a first end of the fourth inductor Ld, a second end of the fourth inductor Ld is connected to a midpoint of the fourth bridge arm 40, the positive electrode of the power battery 210 is adapted to connect to a first end of the fourth bridge arm 40, and the negative electrode of the power battery 210 is adapted to connect to a second end of the fourth bridge arm 40. Wherein in a third state, the fourth bridge arm 40 is configured to perform voltage conversion on electric energy output by the photovoltaic solar module 220 to charge the power battery 210.

Specifically, as shown in FIG. 3, the fourth bridge arm 40 includes: a seventh switching tube VT7 and an eighth switching tube VT8 connected in series, wherein a first end of the seventh switching tube VT7 and a first end of the eighth switching tube VT8 are both connected to the controller (not shown in the figure), a second end of the seventh switching tube VT7 and a third end of the eighth switching tube VT8 are connected, and a fourth node is provided as the midpoint of the fourth bridge arm 40; and the positive electrode of the photovoltaic solar module 220 is connected to the first end of the fourth inductor Ld, the second end of the fourth inductor Ld is connected to the midpoint of the fourth bridge arm 40, and the positive electrode and the negative electrode of the power battery 210 are respectively connected to the first end of the fourth bridge arm 40 (a third end of the seventh switching tube VT7) and the second end of the fourth bridge arm 40 (a second end of the eighth switching tube VT8).

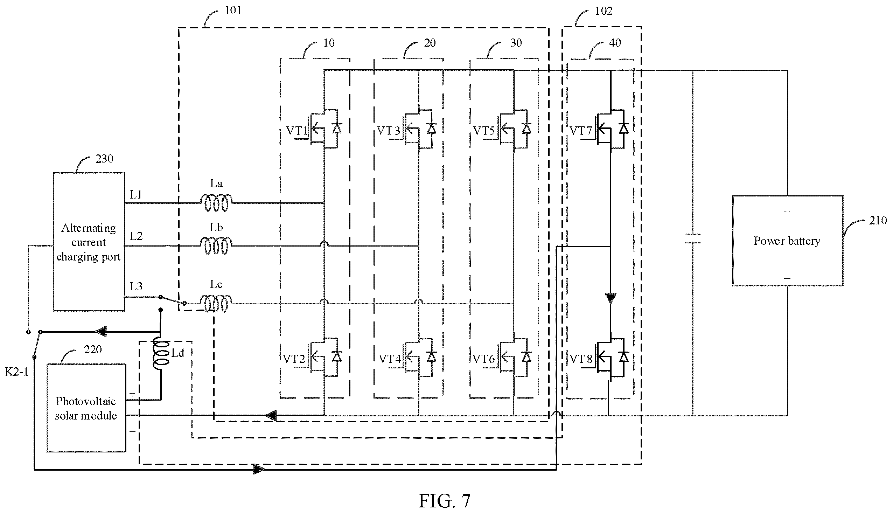

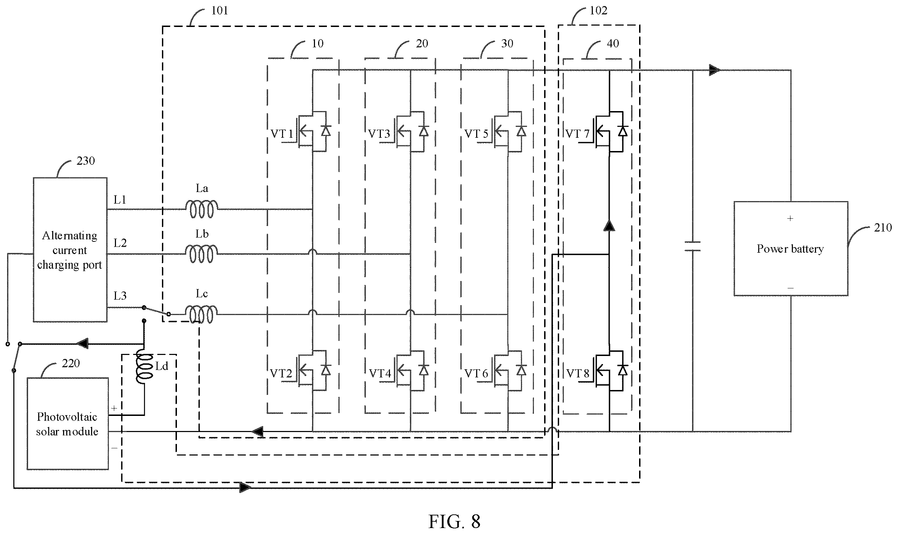

When in the third state, that is, when the power battery 210 is charged through the photovoltaic solar module 220, the fourth bridge arm 40 is controlled, so that electric energy output by the photovoltaic solar module 220 changes in voltage to charge the power battery 210. For example, as shown in FIG. 7, the fourth bridge arm 40 can be controlled by a controller. For example, within a first time period, the controller can control the eighth switching tube VT8 to be in an on state and control the seventh switching tube VT7 to be in an off state, and the photovoltaic solar module 220, the fourth inductor Ld, and the eighth switching tube VT8 form a loop, so that energy of the photovoltaic solar module 220 is stored in the fourth inductor Ld. As shown in FIG. 8, within a second time period, the controller can control the seventh switching tube VT7 to be in an on state and control the eighth switching tube VT8 to be in an off state, and the photovoltaic solar module 220, the fourth inductor Ld, the seventh switching tube VT7, and the power battery 210 form a loop, so that the energy stored in the fourth inductor Ld is superimposed onto direct current of the photovoltaic solar module 220 to increase a charging voltage provided by the photovoltaic solar module 220, and therefore the power battery 210 is charged in a boosting manner.

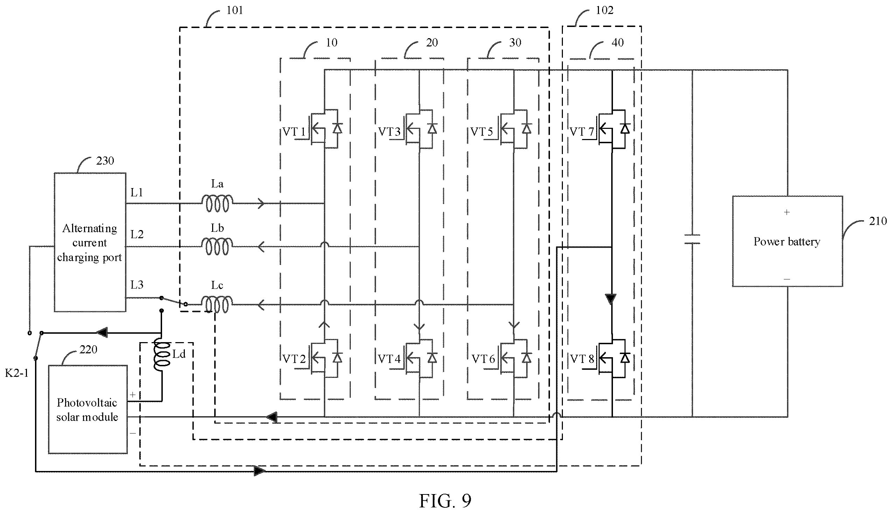

In addition, when in the first state, that is, during collaborative charging of three-phase alternating current and photovoltaic solar module, the first bridge arm 10, the second bridge arm 20, the third bridge arm 30, and the fourth bridge arm 40 can be controlled to charge the power battery. For example, as shown in FIG. 9, in a positive half cycle of alternating current, within a first time period, the first bridge arm 10, the second bridge arm 20, and the third bridge arm 30 can be controlled by a controller. For example, the controller can control the second switching tube VT2, the fourth switching tube VT4, and the sixth switching tube VT6 to be in an on state and control the first switching tube VT1, the third switching tube VT3, and the fifth switching tube VT5 to be in the off state, so that energy at the alternating current charging port 230 is stored in the first inductor La, the second inductor Lb, and the third inductor Lc. The controller can control the eighth switching tube VT8 to be in an on state and control the seventh switching tube VT7 to be in an off state, and the photovoltaic solar module 220, the fourth inductor Ld, and the eighth switching tube VT8 form a loop, so that energy of the photovoltaic solar module 220 is stored in the fourth inductor Ld.

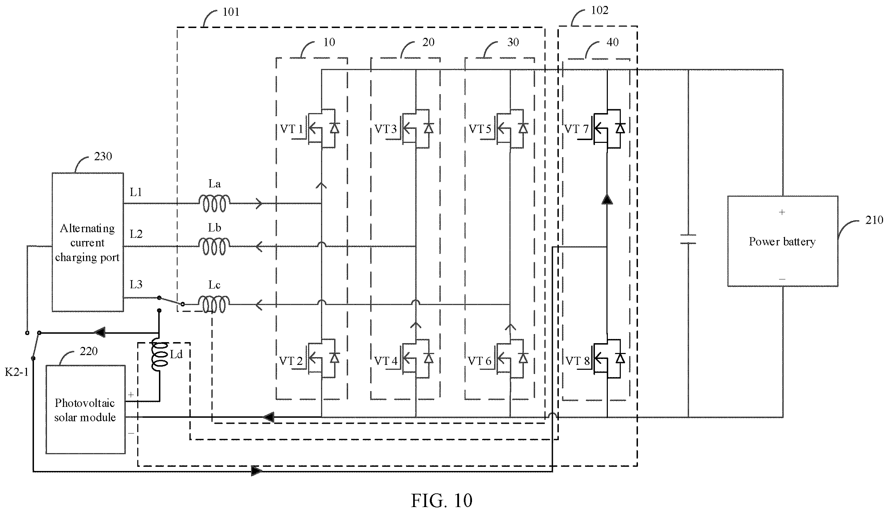

As shown in FIG. 10, within a second time period, the controller can control the first switching tube VT1, the fourth switching tube VT4, and the sixth switching tube VT6 to be in an on state and control the second switching tube VT2, the third switching tube VT3, and the fifth switching tube VT5 to be in an off state, the alternating current charging port 230, the first inductor La, the first switching tube VT1, the power battery 210, the fourth switching tube VT4, and the second inductor Lb form a loop, and the alternating current charging port 230, the first inductor La, the first switching tube VT1, the power battery 210, the sixth switching tube VT6, and the third inductor Lc form a loop, so that the energy stored in the first inductor La is released into the power battery 210, and therefore three-phase alternating current input through the alternating current charging port 230 is converted into direct current to charge the power battery 210. The controller can further control the second switching tube VT2, the third switching tube VT3, and the sixth switching tube VT6 to be in an on state and control the first switching tube VT1, the fourth switching tube VT4, and the fifth switching tube VT5 to be in an off state, the alternating current charging port 230, the second inductor Lb, the third switching tube VT3, the power battery 210, the second switching tube VT2, and the first inductor La form a loop, and the alternating current charging port 230, the second inductor Lb, the third switching tube VT3, the power battery 210, the sixth switching tube VT6, and the third inductor Lc form a loop, so that the energy stored in the second inductor Lb is released into the power battery 210, and therefore three-phase alternating current input through the alternating current charging port 230 is converted into direct current to charge the power battery 210. The controller can further control the second switching tube VT2, the fourth switching tube VT4, and the fifth switching tube VT5 to be in an on state and control the first switching tube VT1, the third switching tube VT3, and the sixth switching tube VT6 to be in an off state, the alternating current charging port 230, the third inductor Lc, the fifth switching tube VT5, the power battery 210, the second switching tube VT2, and the first inductor La form a loop, and the alternating current charging port 230, the third inductor Lc, the fifth switching tube VT5, the power battery 210, the fourth switching tube VT4, and the second inductor Lb form a loop, so that the energy stored in the third inductor Lc is released into the power battery 210, and therefore three-phase alternating current input through the alternating current charging port 230 is converted into direct current to charge the power battery 210. The controller can further control the eighth switching tube VT8 to be in an on state and control the seventh switching tube VT7 to be in an off state, the photovoltaic solar module 220, the fourth inductor Ld, the seventh switching tube VT7, and the power battery 210 form a loop, so that the energy stored in the fourth inductor Ld is superimposed onto direct current of the photovoltaic solar module 220 to increase a charging voltage provided by the photovoltaic solar module 220, and therefore the power battery 210 is charged in a boosting manner.

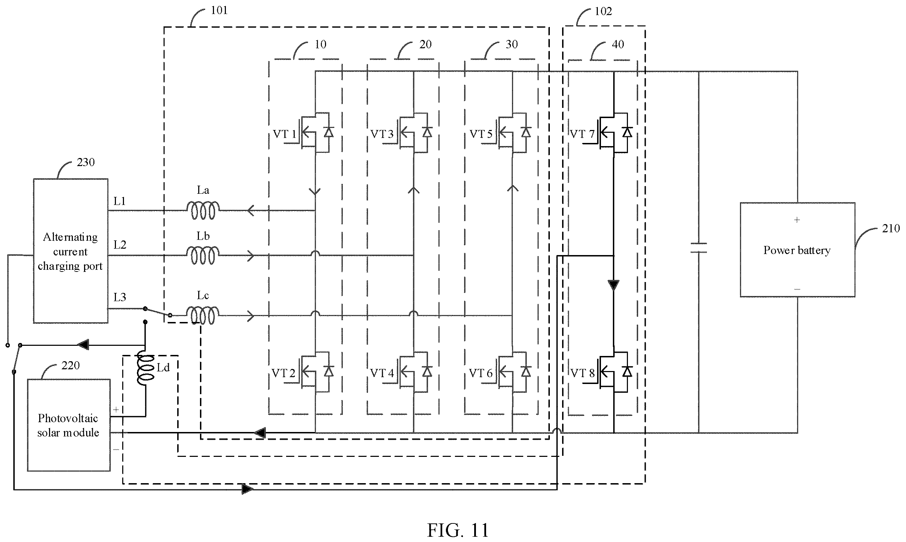

For example, as shown in FIG. 11, in a negative half cycle of alternating current, within a third time period, the first bridge arm 10, the second bridge arm 20, and the third bridge arm 30 can be controlled by a controller. For example, the controller can control the first switching tube VT1, the third switching tube VT3, and the fifth switching tube VT5 to be in an on state and control the second switching tube VT2, the fourth switching tube VT4, and the sixth switching tube VT6 to be in an off state, so that energy at the alternating current charging port 230 is stored in the first inductor La, the second inductor Lb, and the third inductor Lc. The controller can further control the eighth switching tube VT8 to be in an on state and control the seventh switching tube VT7 to be in an off state, and the photovoltaic solar module 220, the fourth inductor Ld and the eighth switching tube VT8 form a loop, so that energy of the photovoltaic solar module 220 is stored in the fourth inductor Ld.

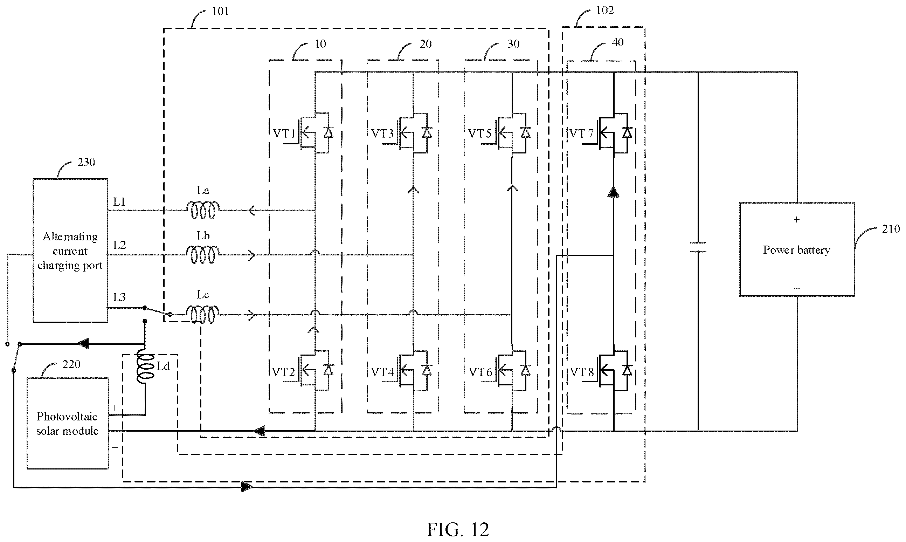

As shown in FIG. 12, within a fourth time period, the first bridge arm 10, the second bridge arm 20, and the third bridge arm 30 can be controlled by a controller. For example, the controller can control the second switching tube VT2, the third switching tube VT3, and the fifth switching tube VT5 to be in an on state and control the first switching tube VT1, the fourth switching tube VT4, and the sixth switching tube VT6 to be in an off state, the first inductor La, the alternating current charging port 230, the second inductor Lb, the third switching tube VT3, the power battery 210, and the second switching tube VT2 form a loop, and the first inductor La, the alternating current charging port 230, the third inductor Lc, the fifth switching tube VT5, the power battery 210, and the second switching tube VT2 form a loop, so that the energy stored in the first inductor La is released into the power battery 210, and therefore three-phase alternating current input through the alternating current charging port 230 is converted into direct current to charge the power battery 210. The controller can further control the first switching tube VT1, the fourth switching tube VT4, and the fifth switching tube VT5 to be in an on state and control the second switching tube VT2, the third switching tube VT3, and the sixth switching tube VT6 to be in an off state, the second inductor Lb, the alternating current charging port 230, the first inductor La, the first switching tube VT1, the power battery 210, and the fourth switching tube VT4 form a loop, and the second inductor Lb, the alternating current charging port 230, the third inductor Lc, the fifth switching tube VT5, the power battery 210, and the fourth switching tube VT4 form a loop, so that the energy stored in the second inductor Lb is released into the power battery 210, and therefore three-phase alternating current input through the alternating current charging port 230 is converted into direct current to charge the power battery 210. The controller can further control the first switching tube VT1, the third switching tube VT3, and the sixth switching tube VT6 to be in an on state and control the second switching tube VT2, the fourth switching tube VT4, and the fifth switching tube VT5 to be in an off state, the third inductor Lc, the alternating current charging port 230, the first inductor La, the first switching tube VT1, the power battery 210, and the sixth switching tube VT6 form a loop, and the third inductor Lc, the alternating current charging port 230, the second inductor Lb, the third switching tube VT3, the power battery 210, and the sixth switching tube VT6 form a loop, so that the energy stored in the third inductor Lc is released into the power battery 210, and therefore three-phase alternating current input through the alternating current charging port 230 is converted into direct current to charge the power battery 210. The controller can further control the seventh switching tube VT7 to be in an on state and control the eighth switching tube VT8 to be in an off state, and the photovoltaic solar module 220, the fourth inductor Ld, the seventh switching tube VT7, and the power battery 210 form a loop, so that the energy stored in the fourth inductor Ld is superimposed onto direct current of the photovoltaic solar module 220 to increase a charging voltage provided by the photovoltaic solar module 220, and therefore the power battery 210 is charged in a boosting manner.

According to one embodiment of the present disclosure, as shown in FIG. 9, the alternating current charging unit 101 further includes: a fifth bridge arm 50, wherein an N wire of the alternating current charging port 230 is adapted to connect to a midpoint of the fifth bridge arm 50, a first end of the fifth bridge arm 50 is connected to the first current convergence end, and a second end of the fifth bridge arm 50 is connected to the second current convergence end. Wherein in a fourth state, the first bridge arm 10, the second bridge arm 20, the third bridge arm 30, and the fifth bridge arm 50 are configured to convert three-phase alternating current input through the alternating current charging port 230 into direct current to charge the power battery 210.

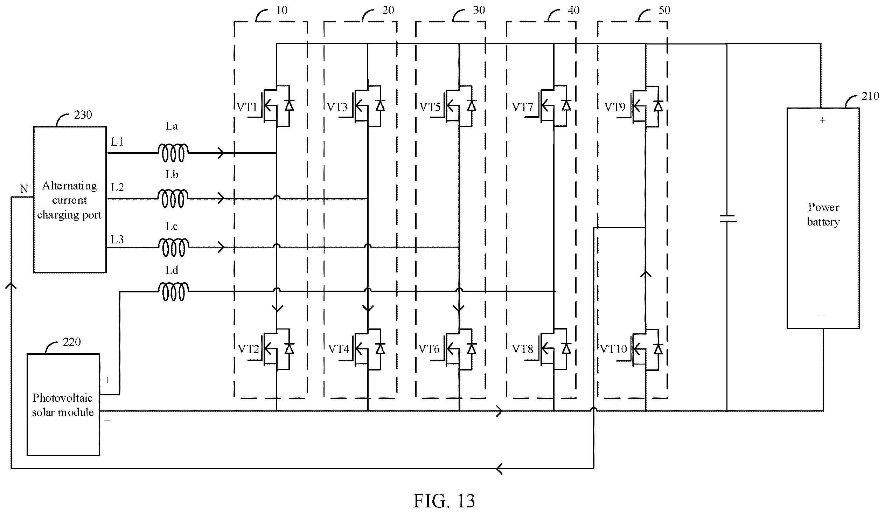

Specifically, as shown in FIG. 13, the fifth bridge arm 50 may include: a ninth switching tube VT9 and a tenth switching tube VT10 connected in series, wherein a first end of the ninth switching tube VT9 and a first end of the tenth switching tube VT10 are both connected to the controller (not shown in the figure), a second end of the ninth switching tube VT9 and a third end of the tenth switching tube VT10 are connected, and a fifth node is provided as the midpoint of the fifth bridge arm 50. The N wire of the alternating current charging port 230 is connected to the midpoint of the fifth bridge arm 50, the first end of the fifth bridge arm 50 (a third end of the VT9) is connected to the first current convergence end, and the second end of the fifth bridge arm 50 (a second end of the VT10) is connected to the second current convergence end. The first current convergence end is connected to the positive electrode of the power battery 210, and the second current convergence end is connected to the negative electrode of the power battery 210.

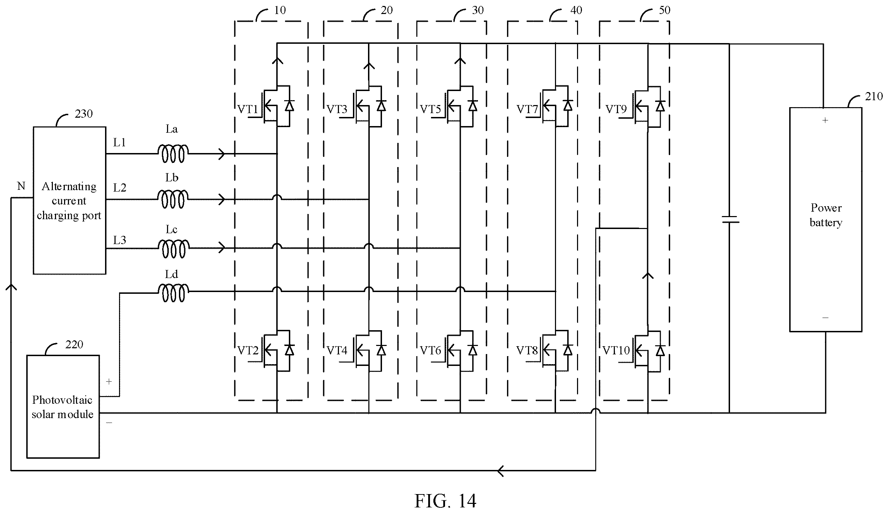

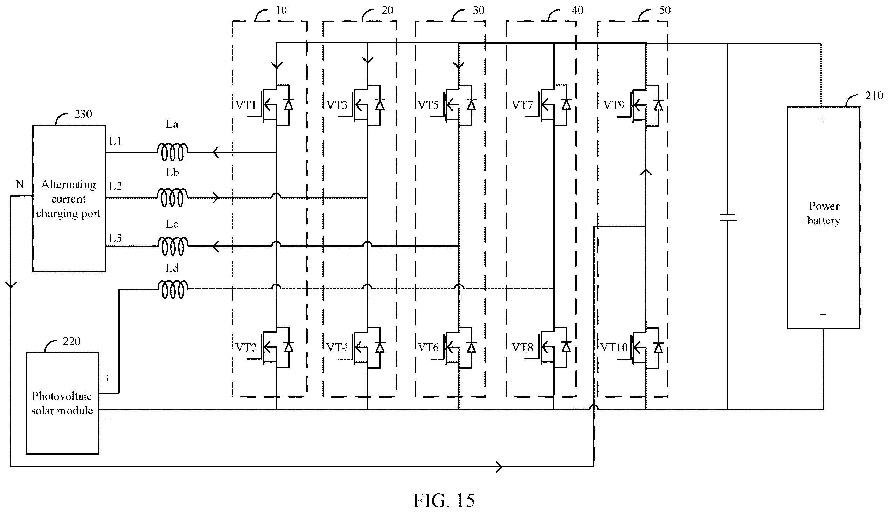

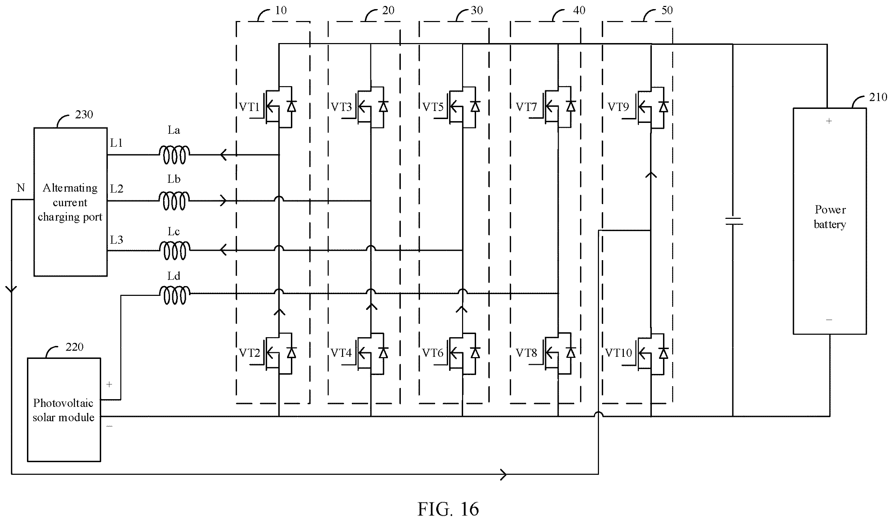

When in the fourth state, that is, during three-phase interleaved alternating current charging, electricity is stored in an inductor by controlling the first bridge arm 10, the second bridge arm 20, the third bridge arm 30, and the fifth bridge arm 50, and then the electricity stored in the inductor is released into the power battery 210 by controlling the first bridge arm 10, the second bridge arm 20, the third bridge arm 30, and the fifth bridge arm 50, so that three-phase alternating current input through the alternating current charging port 230 can be converted into direct current to charge the power battery 210. For example, as shown in FIG. 13, the first bridge arm 10, the second bridge arm 20, the third bridge arm 30, and the fifth bridge arm 50 can be controlled by a controller. For example, in a positive half cycle of alternating current, within a first time period, the controller can control the second switching tube VT2, the fourth switching tube VT4, the sixth switching tube VT6, and the tenth switching tube VT10 to be in an on state and control the first switching tube VT1, the third switching tube VT3, the fifth switching tube VT5, and the ninth switching tube VT9 to be in the off state, so that energy at the alternating current charging port 230 is stored in the first inductor La, the second inductor Lb, and the third inductor Lc. As shown in FIG. 14, within a second time period, the controller can control the first switching tube VT1, the third switching tube VT3, the fifth switching tube VT5, and the tenth switching tube VT10 to be in an on state and control the second switching tube VT2, the fourth switching tube VT4, the sixth switching tube VT6, and the ninth switching tube VT9 to be in an off state, the alternating current charging port 230, the first inductor La, the first switching tube VT1, the power battery 210, and the tenth switching tube VT10 form a loop, the alternating current charging port 230, the second inductor Lb, the third switching tube VT3, the power battery 210, and the tenth switching tube VT10 form a loop, and the alternating current charging port 230, the third inductor Lc, the fifth switching tube VT5, the power battery 210, and the tenth switching tube VT10 form a loop, so that the energy stored in the first inductor La, the second inductor Lb, and the third inductor Lc is released into the power battery 210, and therefore three-phase alternating current input through the alternating current charging port 230 is converted into direct current to charge the power battery 210. As shown in FIG. 15, in a negative half cycle of alternating current, within a third time period, the controller controls the first switching tube VT1, the third switching tube VT3, the fifth switching tube VT5, and the ninth switching tube VT9 to be in an on state, and controls the second switching tube VT2, the fourth switching tube VT4, the sixth switching tube VT6, and the tenth switching tube VT10 to be in an off state, so that energy at the alternating current charging port 230 is stored in the first inductor La, the second inductor Lb, and the third inductor Lc. As shown in FIG. 16, within a fourth time period, the controller can control the second switching tube VT2, the fourth switching tube VT4, the sixth switching tube VT6, and the ninth switching tube VT9 to be in an on state and control the first switching tube VT1, the third switching tube VT3, the fifth switching tube VT5, and the tenth switching tube VT10 to be in an off state, the first inductor La, the alternating current charging port 230, the ninth switch VT9, the power battery 210, and the second switch VT2 form a loop, the second inductor Lb, the alternating current charging port 230, the ninth switch VT9, the power battery 210, and the fourth switch VT4 form a loop, and the third inductor Lc, the alternating current charging port 230, the ninth switch VT9, the power battery 210, and the sixth switch VT6 form a loop, so that the energy stored in the first inductor La, the second inductor Lb, and the third inductor Lc is released into the power battery 210, and therefore three-phase alternating current input through the alternating current charging port 230 is converted into direct current to charge the power battery 210.

According to one embodiment of the present disclosure, the photovoltaic solar module 220 is formed by connecting a plurality of photovoltaic solar panels in series, and an output voltage of the photovoltaic solar module 220 is greater than 60V.

Specifically, the photovoltaic solar module 220 may include a plurality of photovoltaic solar panels, and the plurality of photovoltaic solar panels are connected in series, so that an output voltage of the photovoltaic solar module 220 can be increased. That is, the plurality of photovoltaic solar panels are connected in series to form a high-voltage solar panel, so that an output voltage of the photovoltaic solar module 220 is greater than 60V, and therefore energy of the solar panel can directly charge the power battery 210 after flowing through the alternating current charging unit 102, thereby reducing the number of inversions and therefore increasing the conversion rate.

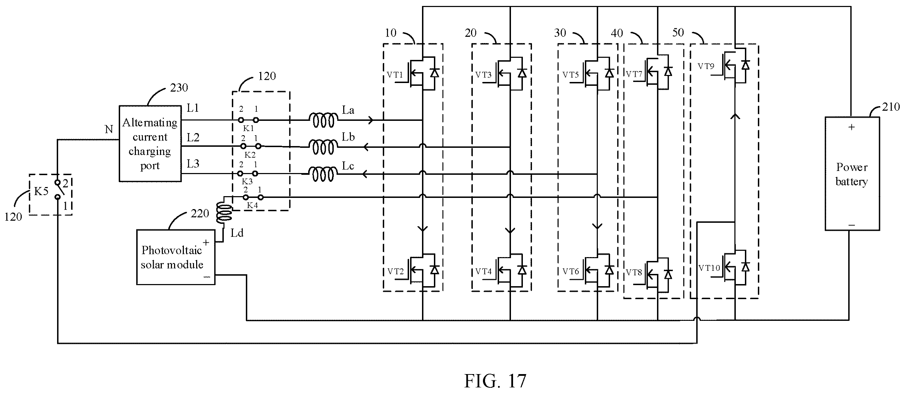

According to one embodiment of the present disclosure, as shown in FIG. 17, the charging apparatus for a power battery 210 further includes a switching module 120, wherein the switching module 120 is configured to: enable the charging apparatus to switch between the first state, the second state, the third state, and the fourth state, and enable the charging apparatus to stop charging.

Specifically, through disposing of the switching module 120, charging in different states can be achieved. For example, through different connection states of switches, the charging apparatus can be switched between a state in which three-phase alternating current charging and photovoltaic solar charging collaborate to charge the power battery 210, a three-phase alternating current charging state, a photovoltaic solar charging state and a three-phase interleaved alternating current charging; and when there is no need to charge the power battery 210, the switches can be all controlled to be in a disconnected state, so that the charging apparatus can be enabled to stop charging.

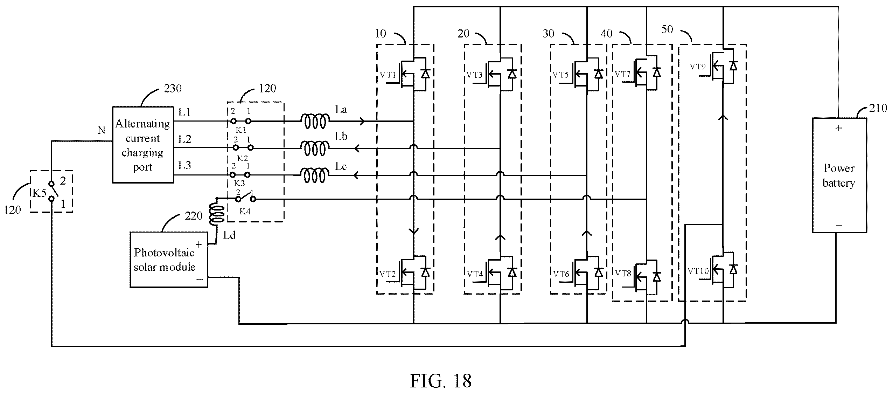

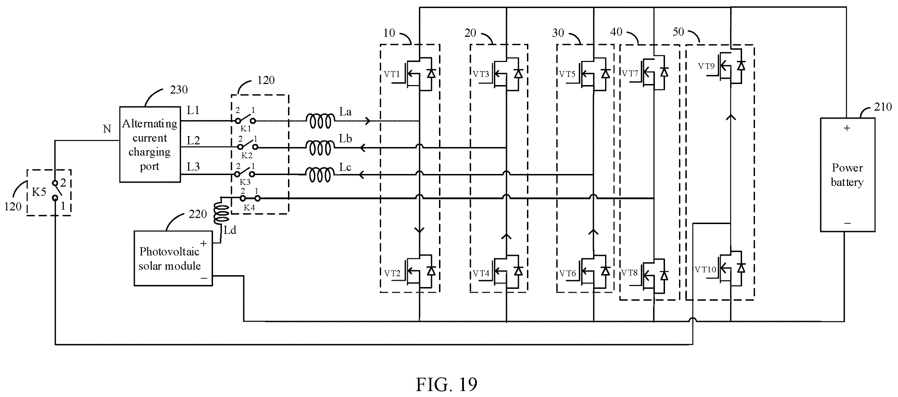

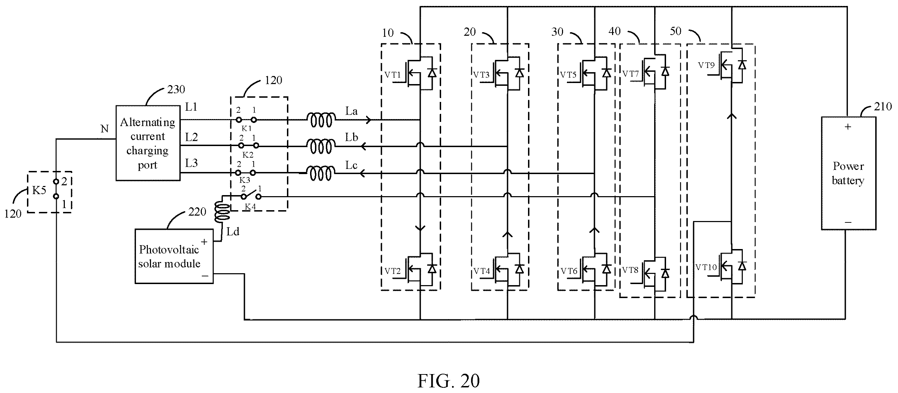

For example, as shown in FIG. 17, the switching module 120 may include a switch K1, a switch K2, a switch K3, a switch K4, and a switch K5, wherein the first inductor La is connected to a first end of the switch K1, a second end of the switch K1 is connected to the live wire L1 of the alternating current charging port 230, the second inductor Lb is connected to a first end of the switch K2, a second end of the switch K2 is connected to the live wire L2 of the alternating current charging port 230, the third inductor Lc is connected to a first end of the switch K3, a second end of the switch K3 is connected to the live wire L3 of the alternating current charging port 230, the fourth inductor Ld is connected to a second end of the switch K4, a first end of the fifth switch K5 is connected to the negative electrode of the power battery 210, and a second end of the fifth switch K5 is connected to the N wire of the alternating current charging port 230. When the switch K1, the switch K2, the switch K3, and the switch K4 are controlled to be in a closed state and the switch K5 is controlled to be in an open state, the charging apparatus is in the first state, that is, three-phase alternating current and the photovoltaic solar module 220 charges the power battery 210 collaboratively. As shown in FIG. 18, when the switch K1, the switch K2 and the switch K3 are controlled to be in a closed state and the switch K4 and the switch K5 are controlled to be in an open state, the charging apparatus is in the second state, that is, the power battery 210 is charged by three-phase alternating current. As shown in FIG. 19, when the switch K4 is controlled to be in a closed state and the switch K1, the switch K2, the switch K3 and the switch K5 are controlled to be in an open state, the charging apparatus is in the third state, that is, the power battery 210 is charged by the photovoltaic solar module 220. As shown in FIG. 20, when the switch K1, the switch K2, the switch K3 and the switch K5 are controlled to be in a closed state and the control switch K4 is controlled to be in an open state, the charging apparatus is in the fourth state, that is, the power battery 210 is charged by the alternating current charging port 230.

It should be noted that the switches may specifically select single-pole single-throw switches, single-pole double-throw switches, or the like, based on an actual situation of a circuit.

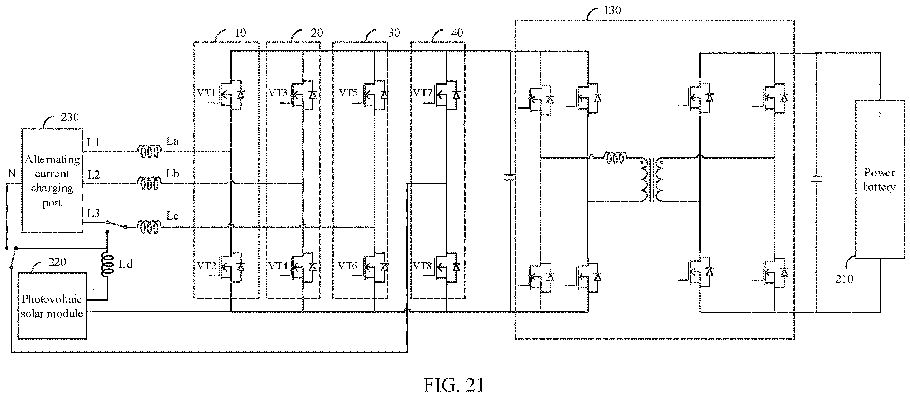

According to one embodiment of the present disclosure, as shown in FIG. 21, the charging apparatus for a power battery 210 further includes: a DC-DC module 130, wherein a first end of the DC-DC module 130 is connected to the charging apparatus, and a second end of the DC-DC module 130 is connected to the power battery 210.

Specifically, as shown in FIG. 21, when the power battery 210 is charged by the alternating current charging port 230, or when the power battery 210 is charged by the photovoltaic solar module 220, or when the power battery 210 is charged collaboratively by the alternating current charging port 230 and the photovoltaic solar module 220, current output by the alternating current charging port 230 and current output by the photovoltaic solar module 220 are boosted by the first inductor La, the second inductor Lb and the third inductor Lc, and then electric energy is delivered into the DC-DC module 130. The DC-DC module 130 is controlled, for example, the DC-DC module 130 can be controlled by a controller to be in an on state, so that the electric energy is converted by the DC-DC module 130 and then delivered into the power battery 210 to charge the power battery 210. Therefore, by use of the DC-DC module, a power supply can be isolated from the power battery 210 in a charging process to achieve isolated charging, so that the charging safety is improved.

According to one embodiment of the present disclosure, inductors in a PFC circuit are reused as the first inductor La, the second inductor Lb and the third inductor Lc, and bridge arms in the PFC circuit are reused as the first bridge arm 10, the second bridge arm 20 and the third bridge arm 30. Therefore, by reuse of components in a PFC circuit of an on-board charger, a number of new components introduced into the charging apparatus can be reduced, so that costs of the charging apparatus are reduced.

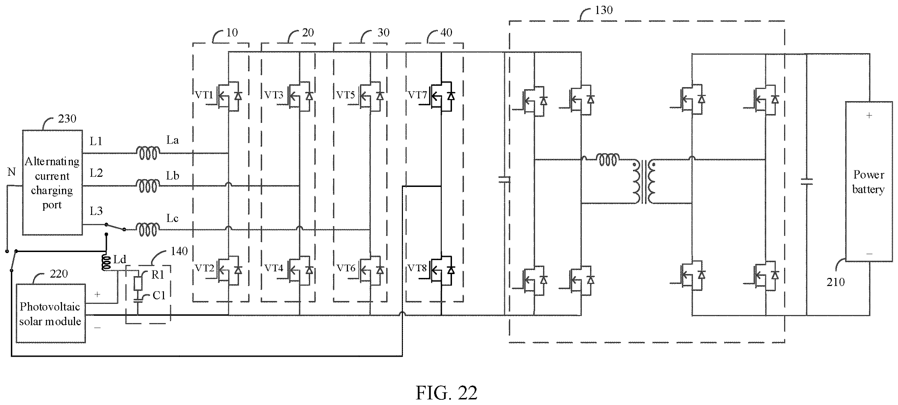

According to one embodiment of the present disclosure, as shown in FIG. 22, the charging apparatus for a power battery 210 further includes: a buffer module 140, wherein the buffer module 140 is disposed between the positive electrode and the negative electrode of the photovoltaic solar module 220, and the buffer module 140 is configured to mitigate impact on components of a voltage change module at a moment when the photovoltaic solar module 220 outputs electric energy to the voltage change module.

Specifically, as shown in FIG. 22, through arrangement of the buffer module 140 between the positive electrode and the negative electrode of the photovoltaic solar module 220, when the solar panel is connected to a charging system to charge the power battery 210, charging OBC components by instantaneous voltage can be reduced to reduce impact of the instantaneous voltage on a bus capacitor, so that the service life of an OBC is prolonged.

According to one embodiment of the present disclosure, as shown in FIG. 22, the buffer module 140 includes: a first resistor R1 and a first capacitor C1 connected in series, wherein a series-connected first end is connected to the positive electrode of the photovoltaic solar module 220, and a series-connected second end is connected to the negative electrode of the photovoltaic solar module 220. Therefore, when the photovoltaic solar module 220 is connected to the charging apparatus for a power battery 210, impact of the instantaneous voltage on components in a circuit can be reduced by use of the first resistor R1 and the first capacitor C1, so that the service life of the charging apparatus for a power battery 210 is prolonged.

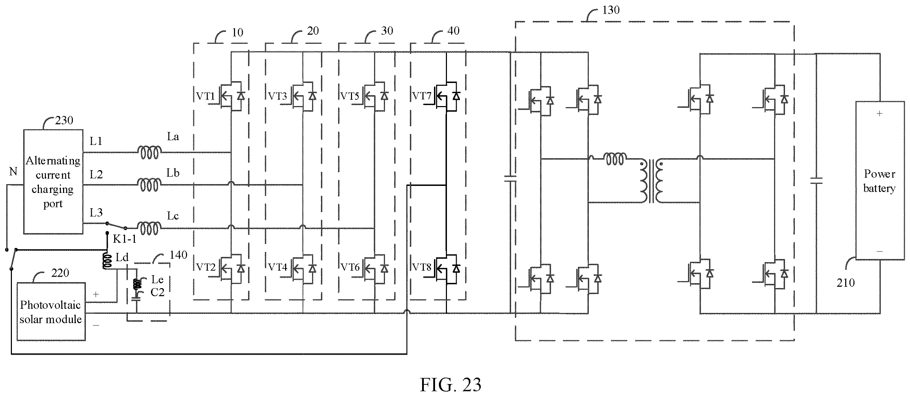

According to another embodiment of the present disclosure, as shown in FIG. 23, the buffer module 140 includes: a fifth inductor Le and a second capacitor C2 connected in series, wherein a series-connected first end is connected to the positive electrode of the photovoltaic solar module 220, and a series-connected second end is connected to the negative electrode of the photovoltaic solar module 220. Therefore, when the photovoltaic solar module 220 is connected to the charging apparatus for a power battery 210, impact of the instantaneous voltage on the components in the circuit can be reduced through the fifth inductor Le and the second capacitor C2, so that the service life of the charging apparatus for a power battery 210 is prolonged.

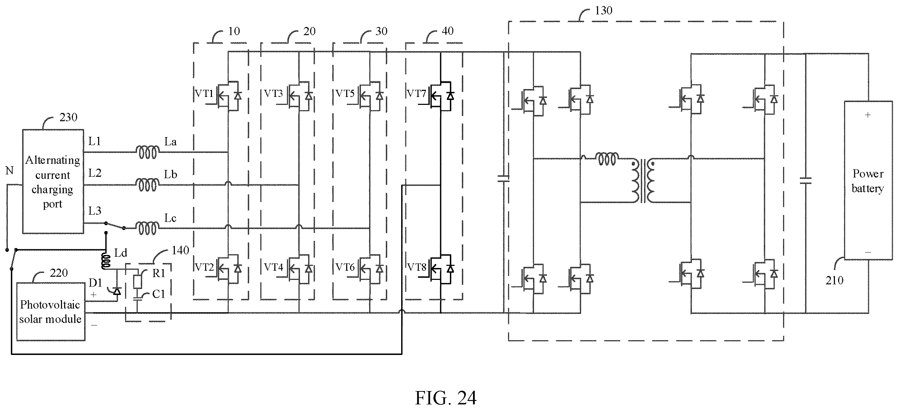

In addition, as shown in FIG. 24, the charging apparatus for a power battery 210 may further include: a first diode D1, wherein a positive electrode of the first diode D1 is connected to the positive electrode of the photovoltaic solar module 220, and a negative electrode of the first diode D1 is connected to the first end of the fourth inductor Ld. When the photovoltaic solar module 220 is incorrectly connected to the charging apparatus for a power battery 210, that is, when the positive electrode of the photovoltaic solar module 220 is mistakenly connected as the negative electrode and the negative electrode is mistakenly connected as the positive electrode, the first diode D1 can prevent direct current output by the photovoltaic solar module 220 from flowing into the circuit, so that damage to the components can be prevented. Furthermore, during normal operation of the photovoltaic solar module 220, the first diode D1 can prevent current output by the alternating current charging port 230 from entering the photovoltaic solar module 220, so that damage to the photovoltaic solar module 220 is avoided.

According to one embodiment of the present disclosure, a DC-DC circuit of an on-board charger OBC module is reused as the DC-DC module 130.

Specifically, by reuse of the DC-DC circuit of the on-board charger OBC module as the DC-DC module 130, the number of new components introduced into the charging apparatus can be reduced, so that the costs of the charging apparatus are reduced; and moreover, isolated charging can be achieved, so that the safety of electricity use is improved. In addition, a controller of the OBC module and a controller of the photovoltaic solar module are the same controller, so that a demand for controllers can be reduced, and therefore the costs is reduced and integration of control components is improved.

It will be noted that in order to facilitate understanding, upper bridge arms and lower bridge arms in FIG. 1 to FIG. 24 are all illustrated as MOSFETs (Metal Oxide Semiconductor Field Effect Transistor, metal-oxide semiconductor field effect transistors), which will not be understood as a restriction to the present disclosure. In the embodiments of the present disclosure, the switching tubes may be power switching tubes, MOSFETs, IGBTs (Insulated Gate Bipolar Transistor, insulated gate bipolar transistors), SiC (silicon carbide) components and other components with on-off functions.

In summary, according to the charging apparatus for a power battery in the embodiments of the present disclosure, the alternating current charging port and the photovoltaic solar module are adapted to connect to the first end of the charging module, and the power battery is adapted to connect to the second end of the charging module. When in the first state, the charging module is configured to: convert three-phase alternating current input through the alternating current charging port into direct current to charge the power battery, and perform voltage conversion on electric energy output by the photovoltaic solar module to charge the power battery. Therefore, the charging apparatus can increase the charging speed, increase the conversion rate of solar energy, and reduce the demand for grid energy, thereby saving the charging costs for vehicle owners.

Corresponding to the foregoing embodiments, the present disclosure further provides a charging control system.

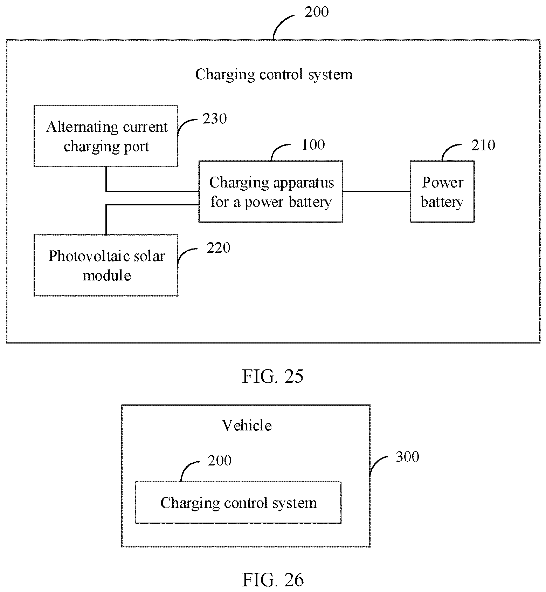

As shown in FIG. 25, a charging control system 200 according to an embodiment of the present disclosure may include a power battery 210 and the foregoing charging apparatus 100 for a power battery, and the power battery 210 is connected to a first end of the charging apparatus 100.

According to one embodiment of the present disclosure, the charging control system 200 further includes: a photovoltaic solar module 220, wherein the photovoltaic solar module 220 is connected to a second end of the charging apparatus 100.

According to one embodiment of the present disclosure, the charging control system 200 further includes: an alternating current charging port 230, wherein the alternating current charging port 230 is connected to the second end of the charging apparatus 100.

It should be noted that for details not disclosed in the charging control system according to the embodiment of the present disclosure, please refer to details disclosed in the charging apparatus for a power battery according to the embodiment of the present disclosure, and the details will not be repeated here.

The charging control system according to the embodiment of the present disclosure, including the power battery and the foregoing charging apparatus for a power battery, can increase the charging speed, increase the conversion rate of solar energy, and reduce the demand for grid energy, thereby saving the charging costs for vehicle owners.

Corresponding to the foregoing embodiments, the present disclosure further provides a vehicle.

As shown in FIG. 26, a vehicle 300 according to an embodiment of the present disclosure includes the foregoing charging control system 200.

The vehicle according to the embodiment of the present disclosure, including the foregoing charging control system, can increase the charging speed, increase the conversion rate of solar energy, and reduce the demand for grid energy, thereby saving the charging costs for vehicle owners.

It should be noted that logic and/or steps represented in the flowcharts or described in other ways herein, for example, can be considered as a sequenced list of executable instructions for implementing a logical function, and can be specifically implemented in any computer-readable medium to be used by instruction execution systems, apparatuses or devices (such as a computer-based system, a system including a processor or other systems that can fetch instructions from the instruction execution systems, apparatuses or devices and execute the instructions), or used in combination with these instruction execution systems, apparatuses or devices. In this specification, the "computer-readable medium" may be any apparatus that may include, store, exchange information with, propagate, or transmit a program to be used by the instruction execution systems, apparatuses or devices or used in combination with these instruction execution systems, apparatuses or devices. More specific examples (a non-exhaustive list) of the computer-readable medium include the followings: an electrical connection portion (an electronic apparatus) having one or more wires, a portable computer cassette (a magnetic apparatus), a random access memory (RAM), a read-only memory (ROM), an erasable and programmable read-only memory (an EPROM or a flash memory), an optical fiber apparatus, and a portable compact disk read-only memory (CDROM). In addition, the computer-readable medium may even be paper or other suitable media on which the program can be printed because the program may be electronically obtained, for example, by optically scanning the paper or the other media and then editing, interpreting or processing, when necessary, in other suitable ways, and is then stored in a computer memory.

It will be understood that various parts of the present disclosure may be implemented in hardware, software, firmware or a combination thereof. In the foregoing embodiments, a plurality of steps or the method may be implemented by software or firmware stored in a memory and executed by a suitable instruction execution system. For example, if implemented in hardware, as in another embodiment, the various parts can be implemented by any one of the following technologies known in the art or a combination thereof: a discrete logic circuit having a logic gate circuit for implementing a logic function on a data signal, an application-specific integrated circuit having a suitable combinational logic gate circuit, a programmable gate array (PGA), a field programmable gate array (FPGA), and the like.

In the description of this specification, the description with reference to terms such as "one embodiment", "some embodiments", "an example", "a specific example", or "some examples" means that specific features, structures, materials or characteristics described in combination with the embodiment or example are included in at least one embodiment or example of the present disclosure. In this specification, illustrative expressions of the foregoing terms do not necessarily refer to the same embodiment or example. Furthermore, the described specific features, structures, materials or characteristics may be combined in a suitable manner in any one or more embodiments or examples.

In addition, terms "first" and "second" are used for descriptive purposes only, and will not be understood as indicating or implying relative importance or implicitly indicating the quantity of the indicated technical features. Therefore, the features defined as "first" or "second" may explicitly or implicitly include at least one feature. In the description of the present disclosure, unless otherwise clearly and specifically restricted, "more" means at least two, for example, two, three, and the like.

In the present disclosure, unless otherwise clearly stipulated and restricted, terms such as "installation", "mutual connection", "connection" and "fixation" will be understood in a broad sense. For example, unless otherwise clearly restricted, fixed connection, detachable connection or integration, mechanical connection or electrical connection, direct connection or indirect connection through an intermediate medium, and internal connection of two components or an interaction relationship between two components can be accepted. For those of ordinary skill in the art, specific meanings of the foregoing terms in the present disclosure can be understood based on specific circumstances.

Although the embodiments of the present disclosure have been shown and described foregoing, it can be understood that the foregoing embodiments are exemplary and will not be construed as restrictions to the present disclosure. Those of ordinary skill in the art may change, modify, replace and vary the foregoing embodiments within the scope of the present disclosure.

## Claims

1. A charging apparatus (100) for a power battery, comprising:
a charging module (110), wherein an alternating current charging port (230) and a photovoltaic solar module (220) are adapted to connect to a first end of the charging module (110), and a power battery (210) is adapted to connect to a second end of the charging module (110); and
wherein in a first state, the charging module (110) is configured to: convert three-phase alternating current input through the alternating current charging port (230) into direct current to charge the power battery (210), and perform voltage conversion on electric energy output by the photovoltaic solar module (220) to charge the power battery (210).

2. The charging apparatus (100) for a power battery according to claim 1, wherein the charging module (110) comprises:
an alternating current charging unit (101), wherein the alternating current charging port (230) is adapted to connect to a first end of the alternating current charging unit (101), and the power battery (210) is adapted to connect to a second end of the alternating current charging unit (101); and
a voltage change unit (102), wherein the photovoltaic solar module (220) is adapted to connect to a first end of the voltage change unit (102), and the power battery (210) is adapted to connect to a second end of the voltage change unit (102); and
wherein in the first state, the alternating current charging unit (101) is configured to convert three-phase alternating current input through the alternating current charging port into direct current to charge the power battery (210), and the voltage change unit (102) is configured to perform voltage conversion on electric energy output by the photovoltaic solar module (220) to charge the power battery (210).

3. The charging apparatus (100) for a power battery according to claim 2, wherein the alternating current charging unit (101) comprises: a first inductor (La), a first bridge arm (10), a second inductor (Lb), a second bridge arm (20), a third inductor (Lc), and a third bridge arm (30);
a live wire of the alternating current charging port (230) is adapted to connect to a first end of the first inductor (La), a live wire of the alternating current charging port (230) is adapted to connect to a first end of the second inductor (Lb), and a live wire of the alternating current charging port (230) is adapted to connect to a first end of the third inductor (Lc);
a second end of the first inductor (La) is connected to a midpoint of the first bridge arm (10), a second end of the second inductor (Lb) is connected to a midpoint of the second bridge arm (20), and a second end of the third inductor (Lc) is connected to a midpoint of the third bridge arm (30);
first ends of the first bridge arm (10), the second bridge arm (20), and the third bridge arm (30) are connected together to form a first current convergence end, and second ends of the first bridge arm (10), the second bridge arm (20), and the third bridge arm (30) are connected together to form a second current convergence end;
a positive electrode of the power battery (210) is adapted to connect to the first current convergence end, and a negative electrode of the power battery (210) is adapted to connect to the second current convergence end; and
wherein in a second state, the first bridge arm (10), the second bridge arm (20), and the third bridge arm (30) are configured to convert three-phase alternating current input through the alternating current charging port (230) into direct current to charge the power battery (210).

4. The charging apparatus (100) for a power battery according to claim 2 or 3, wherein the voltage change unit comprises: a fourth inductor (Ld) and a fourth bridge arm (40);
a positive electrode of the photovoltaic solar module (220) is adapted to connect to a first end of the fourth inductor (Ld), a second end of the fourth inductor (Ld) is connected to a midpoint of the fourth bridge arm (40), the positive electrode of the power battery (210) is adapted to connect to a first end of the fourth bridge arm (40), and the negative electrode of the power battery (210) is adapted to connect to a second end of the fourth bridge arm (40); and
wherein in a third state, the fourth bridge arm (40) is configured to perform voltage conversion on electric energy output by the photovoltaic solar module to charge the power battery (210).

5. The charging apparatus (100) for a power battery according to claim 3, wherein the alternating current charging unit (101) further comprises:
a fifth bridge arm (50), wherein an N wire of the alternating current charging port (230) is adapted to connect to a midpoint of the fifth bridge arm (50), a first end of the fifth bridge arm (50) is connected to the first current convergence end, and a second end of the fifth bridge arm (50) is connected to the second current convergence end; and
wherein in a fourth state, the first bridge arm (10), the second bridge arm (20), the third bridge arm (30), and the fifth bridge arm (50) are configured to convert three-phase alternating current input through the alternating current charging port (230) into direct current to charge the power battery (210).

6. The charging apparatus (100) for a power battery according to any one of claims 1 to 5, wherein the photovoltaic solar module (220) is formed by connecting a plurality of photovoltaic solar panels in series, and an output voltage of the photovoltaic solar module (220) is greater than 60V.

7. The charging apparatus (100) for a power battery according to any one of claims 1 to 6, further comprising:
a switching module (120), wherein the switching module (120) is configured to: enable the charging apparatus to switch between the first state, the second state, the third state, and the fourth state, and enable the charging apparatus to stop charging.

8. The charging apparatus (100) for a power battery according to any one of claims 1 to 7, further comprising:
a DC-DC module (130), wherein a first end of the DC-DC module (130) is connected to the charging apparatus, and a second end of the DC-DC module (130) is connected to the power battery (210).

9. The charging apparatus (100) for a power battery according to claim 3, wherein inductors in a PFC circuit are reused as the first inductor (La), the second inductor (Lb), and the third inductor (Lc), and bridge arms in the PFC circuit are reused as the first bridge arm (10), the second bridge arm (20), and the third bridge arm (30).

10. The charging apparatus (100) for a power battery according to any one of claims 1 to 9, further comprising:
a buffer module (140), wherein the buffer module (140) is disposed between the positive electrode and the negative electrode of the photovoltaic solar module (220), and the buffer module (140) is configured to reduce impact on components of a voltage change module when the photovoltaic solar module (220) outputs electric energy to the voltage change module.

11. The charging apparatus (100) for a power battery according to claim 10, wherein the buffer module (140) comprises:
a first resistor (R1) and a first capacitor (C1) connected in series, wherein a series-connected first end is connected to the positive electrode of the photovoltaic solar module (220), and a series-connected second end is connected to the negative electrode of the photovoltaic solar module (220).

12. The charging apparatus (100) for a power battery according to claim 10 or 11, wherein the buffer module (140) comprises:
a fifth inductor (Le) and a second capacitor (C2) connected in series, wherein a series-connected first end is connected to the positive electrode of the photovoltaic solar module (220), and a series-connected second end is connected to the negative electrode of the photovoltaic solar module (220).

13. The charging apparatus (100) for a power battery according to claim 8, wherein a DC-DC circuit of an on-board charger OBC module is reused as the DC-DC module (130).

14. A charging control system (200), comprising: a power battery and the charging apparatus (100) for a power battery according to any one of claims 1 to 13, wherein the power battery (210) is connected to a first end of the charging apparatus (100).

15. The charging control system (200) according to claim 14, further comprising:
a photovoltaic solar module (220), wherein the photovoltaic solar module (220) is connected to a second end of the charging apparatus (100).

16. The charging control system (200) according to claim 14 or 15, further comprising:
an alternating current charging port (230), wherein the alternating current charging port (230) is connected to the second end of the charging apparatus (100).

17. A vehicle (300), comprising the charging control system according to any one of claims 14 to 16 or the charging apparatus according to any one of claims 1 to 13.
